# EUROPÄISCHE PATENTSCHRIFT

(11) **EP 3 312 243 B1**
(45) Veröffentlichungstag und Bekanntmachung des Hinweises auf die Patenterteilung: **29.06.2022**
(21) Anmeldenummer: 17206484.2
(22) Anmeldetag: 07.12.2011
(51) Int. Cl.: C09D 5/10, C09D 7/61, F16B 2/00, F16C 33/58, F16C 33/62, F16C 35/06, C08K 3/10, C08K 3/38

(54) **KORROSIONSSCHUTZLACK UND DAMIT BESCHICHTETES LAGERBAUTEIL**
ANTICORROSION COATING AND COMPONENT COATED WITH SAME
LAQUE DE PROTECTION CONTRE LA CORROSION ET ÉLÉMENT PALIER REVÊTU CORRESPONDANT

(30) Priorität: 07.12.2010 DE 102010062562; 23.03.2011 DE 102011005921
(43) Veröffentlichungstag der Anmeldung: 25.04.2018
(62) Teilanmeldung aus: 11796959.2
(73) Patentinhaber: Aktiebolaget SKF, 415 50 Göteborg (SE)
(72) Erfinder: VON SCHLEINITZ, Thilo, 97422 Schweinfurt (DE)
(74) Vertreter: Kuhstrebe, Jochen

(56) Entgegenhaltungen:
- EP-A1- 2 008 725
- EP-A2- 1 764 522
- DE-A1- 2 855 120

## Beschreibung

Die Erfindung betrifft einen Korrosionsschutzlack. Weiterhin betrifft die Erfindung ein damit beschichtetes Lagerbauteil, insbesondere eines Großwälzlagers.

Die Anforderungen an einen idealen Lack für Großwälzlager sind kompliziert. Er soll zur Vermeidung der Gefahr von Abrasivstoffrückständen, die eine auf Dauer schädliche Feinkontamination darstellen können, auf nichtgestrahlten und feinbearbeiteten Stahloberflächen trotz deren ungenügender Rauheit hervorragend haften, er soll einfach und fehlerfrei mischbar und mit definierter Schichtdicke gleichmäßig auftragbar sein, er soll gut decken und in nur einer einzigen Schicht fertig gestellt werden, er soll sehr rasch mechanisch belastbar durchhärten, er soll ausgehärtet abriebfest und hoch druckfest sein, er muss absolut ölbeständig sein, er soll im Auftrag nur geringes Einfließen in Spalte bei Kapillarwirkung haben, und er darf ausgehärtet unter Belastung in der Flanschverbindung nicht beliebig kriechen oder fließen oder nachgeben. Er darf andererseits nicht spröde sein oder zu Abplatzen neigen und muss eine Restelastizität besitzen. Gleichzeitig soll er einen maximalen Korrosionsschutz bieten und optional einen erhöhten Haftreibbeiwert.

Maschinenteile können beispielsweise dadurch miteinander zuverlässig verbunden werden, dass sie im Bereich von dafür vorgesehenen Kontaktflächen mit einem hohen Anpressdruck gegeneinander gepresst werden. Der Anpressdruck kann beispielsweise mittels Bolzen, Schrauben oder ähnlichen Verbindungsmitteln erzeugt werden, welche die Maschinenteile in einer Richtung quer, insbesondere senkrecht, zu den Kontaktflächen gegeneinander verspannen. Solange die aus der Reibung zwischen den Kontaktflächen resultierende Reibungskraft nicht überwunden wird, ist der Verbund aus den Maschinenteilen mechanisch stabil, d. h. es kommt nicht zu einer Relativbewegung zwischen den Maschinenteilen. Entsprechendes gilt auch im Hinblick auf das Reibmoment.

Die Höhe der Reibungskraft hängt vom Anpressdruck und vom Reibungskoeffizienten der Kontaktflächen ab. Eine kritische Situation kann auftreten, wenn die auf den Verbund einwirkende Belastung so hoch ist, dass die maximal der belastenden Kraft entgegensetzbare Reibungskraft überwunden wird. In einer derartigen Situation werden die Verbindungsmittel, die primär für eine Zugbelastung ausgelegt sind, auf Scherung belastet und können versagen oder der Verbund kann durch innere Bewegungen zerstört werden. Der Verbund sollte deshalb so ausgelegt werden, dass die verfügbare Reibungskraft unter den vorgesehenen Betriebsbedingungen nicht von verschiebenden Kräften überschritten wird.

Eine hohe Reibungskraft kann durch einen hohen Anpressdruck und einen hohen Reibungskoeffizienten erreicht werden. Innerhalb gewisser Grenzen ist die Erzeugung einer hohen Reibungskraft durch einen entsprechend hohen Anpressdruck noch relativ einfach möglich. Bei sehr hohen Anpressdrücken werden jedoch immer höhere Anforderungen an die Zugbelastbarkeit der Verbindungsmittel und auch an die Druckbelastbarkeit der zu verbindenden Maschinenteile gestellt, die sich zunehmend schwerer oder nur noch mit einem unvertretbaren Aufwand erfüllen lassen. Es ist deshalb insbesondere bei Anwendungen, bei denen der Verbund hohen Belastungen ausgesetzt ist, wünschenswert, einen möglichst hohen Reibungskoeffizienten zu erzielen. Dies ist beispielsweise bei der Fixierung von Lagern, insbesondere von Rotorlagern, von Windkraftanlagen der Fall. Dort kann es erforderlich oder wünschenswert sein, ein möglichst hohes Reibmoment zwischen einem Innenring oder einem Außenring des Lagers, beispielsweise eines zweireihigen Kegelrollenlagers und einem zugehörigen Befestigungsflansch zu erzielen. Ähnliches gilt bei einem Lager, das mehrere Innenringe aufweist. In einem solchen Fall soll eine Relativbewegung zwischen den Innenringen vermieden werden.

Der Erfindung liegt die Aufgabe zugrunde, einen idealen Lack für ein Großwälzlager bereitzustellen, der auch auf nichtgestrahlten und feinbearbeiteten Stahloberflächen trotz deren ungenügender Rauheit hervorragend haftet, so dass keine aufwendige Oberflächenvorbereitung erforderlich ist und kein Risiko einer Kontamination des Lagers durch abrasive Partikel besteht.

Diese Aufgabe wird durch die Merkmalskombinationen der nebengeordneten Ansprüche gelöst.

Beim erfindungsgemäßen Lack handelt es sich um einen Lack auf Polyurethan-Basis. Ein Lack auf Polyurethanbasis ist nicht zu verwechseln mit einem Lack auf Urethanbasis, der beispielsweise in der EP2008725 A1 beschrieben ist. Entgegen der trugschlüssigen Annahme ist Urethan nicht das Monomer von Polyurethan und weist völlig unterschiedliche Eigenschaften auf. Insbesondere geht Urethan andere Verbindungen ein als Polyurethan, so dass z.B. ein Korrosionsschutzlack auf Urethanbasis anders wirkt, als ein Korrosionsschutzlack auf Polyurethanbasis.

Der erfindungsgemäße Lack ist als ein korrosionsschützender Lack ausgebildet und enthält als Inhaltsstoffe einen Binder und als einen weiteren Inhaltsstoff ein korrosionsschützendes Material. Dabei ist der Binder ein Binder auf Polyurethanbasis, wobei das Volumen des Lacks ohne Lösungsmittel einen Anteil an einem polyurethanbasierten Binder von etwa 30 Vol. % enthält. Dies hat den Vorteil, dass durch ein Auftragen des Lacks auf eine Oberfläche ohne zusätzlichen Aufwand ein Korrosionsschutz erzielt wird. Insbesondere kann der erfindungsgemäße Lack Zink als korrosionsschützendes Material enthalten. Die Erfindung hat den Vorteil, dass keine aufwendige Oberflächenvorbereitung, insbesondere kein Strahlen der Oberflächen der Maschinenteile erforderlich ist, auf die der Lack appliziert werden soll. Zusätzlich zu dem Vorteil einer Prozessvereinfachung entfällt das Risiko, dass Abrasivstoffrückstände aus dem Strahlprozess die Maschinenteile auf Dauer schädigen.

Bei einem Polyurethananteil von weniger als 20 % treten Probleme bzgl. der Haftung des Lacks an der Oberfläche des Maschinenteils auf; oberhalb 40 % ist die Korrosionsschutzwirkung des Lacks nicht mehr gewährleistet, da nicht mehr von einer durchgehenden elektrischen Verbindung über das gesamte Volumen der Lackschicht ausgegangen werden kann.

Weiterhin enthält der Lack Hartstoffpartikel, aus einer Titan-Bor-Verbindung, auf die weiter unten im Detail eingegangen wird.

Eine typische erfindungsgemäße Rezeptur sieht also folgendermaßen aus (die %-Angaben sind jeweils auf eine angegebene Basis bezogen und repräsentieren den jeweiligen Anteil daran in Vol%):
Der Lack enthält einen Lösemittelanteil (z. B. Naphta) von 20 % bis 40 %, insbesondere 30 %.

Nach Abzug des Lösemittelanteils setzt sich der verbleibende Trockenanteil folgendermaßen zusammen, wobei als Bezugsgröße für die Prozentzahlen der gesamte Trockenanteil zugrunde gelegt wird:
- 20-40 %, insbesondere 30 %, einkomponentiges feuchtigkeitshärtendes Polyurethan (Basis aromatisches Polyisocyanat),
- 50-80 % Feststoffanteil,
- bis zu 10 % Additive (fest oder flüssig).

Wie oben erwähnt enthält der Lack, Hartstoff-Partikel, wobei die Hartstoff-Partikel vorzugsweise eine Knoop-Härte HK 0,1 von wenigstens 2000 N/mm², vorzugsweise wenigstens 2500 N/mm², aufweisen. Beispielsweise kann die Knoop-Härte HK 0,1 2600 N/mm² betragen. Alternativ oder zusätzlich weisen die die Hartstoff-Partikel eine Mohs-Härte von wenigstens 8,0, vorzugsweise wenigsten 9,0 auf. Beispielsweise kann die Mohs-Härte 9,5 betragen. Weiterhin weisen die Hartstoff-Partikel bei Raumtemperatur einen spezifischen elektrischen Widerstand von maximal 1×10⁻⁴ Ωcm, vorzugsweise maximal 5×10⁻⁵ Ωcm. Insbesondere können die Hartstoff-Partikel bei Raumtemperatur einen spezifischen elektrischen Widerstand von 9 bis 15×10⁻⁶ Ωcm aufweisen.

Dies hat den Vorteil, dass sie die Erzielung eines sehr hohen Reibungskoeffizienten ermöglicht

Durch die Verwendung elektrisch leitender Hartstoff-Partikel, wird eine unerwünschte elektrische Isolierung der Maschinenteile durch den Lack vermieden. Außerdem wird die Möglichkeit geschaffen, eine nahezu vollflächig elektrisch leitende Lackschicht auszubilden. Dies kann sich beispielsweise im Hinblick auf die Ausbildung eines wirksamen Korrosionsschutzes vorteilhaft auswirken.

Die Hartstoff-Partikel können ein Keramikmaterial aufweisen oder aus einem Keramikmaterial bestehen. Mit Keramikmaterialen lassen sich auf kostengünstige Weise sehr hohe Härten realisieren.

Ein Lack auf Polyurethan-Basis weist auch auf einem nicht optimal präparierten Untergrund eine sehr hohe Haftfestigkeit auf. Prinzipiell ist auch ein Lack auf Epoxidharz-Basis möglich. Weiterhin hantelt es sich bei dem Lack vorzugsweise um einen Einkomponenten-System. Dieser lässt sich mit sehr wenig Aufwand verarbeiten. Es ist aber auch möglich, den Lack als ein Zweikomponenten-System auszubilden.

Die Hartstoff-Partikel können Titandiborid aufweisen oder aus Titandiborid bestehen. Titandiborid vereint in sich eine sehr hohe Härte und eine gute elektrische Leitfähigkeit.

Das korrosionsschützende Material kann elektrisch leitend sein. Insbesondere kann das korrosionsschützende Material eine elektrische Leitfähigkeit von wenigstens 1×10⁶ A/Vm, vorzugsweise wenigsten 10×10⁶ A/Vm aufweisen. Typische Werte liegen zwischen 16,7 und 18,3×10⁶ A/Vm. Bei dem korrosionsschützenden Material kann es sich um einen Feststoff handeln. Dies hat insbesondere auch den Vorteil, dass die Kompressibilität einer mit dem Lack ausgebildeten Schicht auch bei starker Druckeinwirkung begrenzt ist. Daraus resultiert die Möglichkeit, mit einer derartigen Schicht einen dauerhaft mechanisch stabilen Verbund auszubilden. Dabei kann das korrosionsschützende Material eine geringere Härte als die Hartstoff-Partikel aufweisen. Weiterhin kann das korrosionsschützende Material wenigstens zum Teil in Pulverform vorliegen. Ebenso kann das korrosionsschützende Material wenigstens zum Teil in Lamellenform vorliegen. Insbesondere kann das korrosionsschützende Material Zink aufweisen oder aus Zink bestehen.

Der erfindungsgemäße Lack kann als einen weiteren Inhaltsstoff weitere Hartstoff-Partikel enthalten. Diese weiteren Hartstoff-Partikel können im Hinblick auf eine andere Funktion als die Hartstoff-Partikel optimiert sein. Beispielsweise können weitere Hartstoff-Partikel eingesetzt werden, die eine nur geringfügig streuende Korngröße aufweisen und demgemäß als Abstandshalter zwischen den Maschinenteilen eingesetzt werden können. Beispielsweise können die weiteren Hartstoff-Partikel Borcarbid aufweisen oder aus Borcarbid bestehen.

Weiterhin kann der Lack ein Lösungsmittel, beispielsweise Naphta, enthalten.

Alle im Folgenden aufgeführten Angaben bzgl. prozentualer Anteile von Stoffen beziehen sich jeweils auf das Volumen, d. h. bei den %-Angaben handelt es ist jeweils um Vol%.

Bezogen auf das Volumen des Lacks inklusive Lösungsmittel kann der Anteil des Lösungsmittels 20-40% betragen. Dabei kann der Lack inklusive Lösungsmittel einen Anteil an korrosionsschützendem Material von wenigstens 10 %, vorzugsweise wenigstens 20 % aufweisen. Weiterhin kann der Lack inklusive Lösungsmittel einen Anteil an Hartstoff-Partikeln von wenigstens 10 %, vorzugsweise wenigstens 20 % aufweisen. Falls weitere Hartstoffpartikel vorhanden sind, kann der Lack einen Anteil an Hartstoff-Partikeln und weiteren Hartstoff-Partikeln von insgesamt wenigstens 10 %, vorzugsweise wenigstens 20 % aufweisen..

Bezogen auf das Volumen ohne Lösungsmittel kann der Lack einen Anteil an Binder von 20-40% enthalten. Ein höherer Binder-Anteil hat einen unzureichenden Korrosionsschutz zur Folge. Bei einem geringeren Binder-Anteil ist eine ausreichende Haftfestigkeit des Lacks am Untergrund nicht mehr gewährleistet. Weiterhin kann der Lack bezogen auf das Volumen ohne Lösungsmittel maximal 10 % Additive enthalten. Beispielsweise kann der Lack ein Thixotropierungsmittel als ein Additiv enthalten. Insgesamt kann der Lack bezogen auf das Volumen ohne Lösungsmittel einen Feststoffanteil ohne Binder von wenigstens 50 %, vorzugsweise wenigstens 70 % aufweisen.

Bezogen auf das Volumen des Lacks ohne Lösungsmittel, Binder und Additiven kann der Lack einen Anteil an korrosionsschützendem Material von 70-30 %, insbesondere 60-40% enthalten. Bei einem geringeren Anteil an korrosionsschützendem Material ergibt sich ein unzureichender Korrosionsschutz. Außerdem kann der Lack einen Anteil an weiteren Hartstoff-Partikeln von höchsten 30 %, vorzugsweise wenigstens 20 % als Substitution aufweisen.

Die Hartstoff-Partikel können eine mittlere Korngröße von höchstens 100 µm, vorzugsweise höchstens 60 µm aufweisen. Außerdem können die Hartstoff-Partikel eine mittlere Korngröße von wenigstens 5 µm, vorzugsweise wenigstens 10 µm aufweisen. Weiterhin können die Hartstoff-Partikel eine maximale Korngröße von höchstens 150 µm, vorzugsweise höchstens 110 µm aufweisen.

Die Erfindung bezieht sich weiterhin auf ein beschichtetes Lagerbauteil, insbesondere einen Lagerring eines Großwälzlagers mit einer nichtgestrahlten Oberfläche, wobei die nichtgestrahlte Oberfläche mit einem Korrosionsschutzlack nach einem der vorhergehenden Ansprüche beschichtet ist.

Außerdem bezieht sich die Offenbarung auf eine Anordnung aus einem ersten Maschinenteil, das eine erste Anlagefläche aufweist und einem zweiten Maschinenteil, das eine zweite Anlagefläche aufweist. Die erste Anlagefläche oder die zweite Anlagefläche ist mit einem reibungserhöhendem Lack beschichtet, der als Inhaltsstoffe einen Binder und Hartstoff-Partikel enthält, wobei die Hartstoff-Partikel eine Titan-Bor-Verbindung aufweisen oder aus einer Titan-Bor-Verbindung bestehen. Weiterhin sind die erste Anlagefläche und die zweite Anlagefläche gegeneinander vorgespannt.

Das erste Maschinenteil und/oder das zweite Maschinenteil sind als ein Lagerbauteil, insbesondere eines Großlagers, insbesondere einer Windkraftanlage, ausgebildet sein. Das Lagerbauteil kann als ein Lagerring, insbesondere als ein Innenring oder ein Außenring, insbesondere eines Wälzlagers oder eines Gleitlagers, ausgebildet sein. Bei der ersten Anlagefläche oder der zweiten Anlagefläche kann es sich beispielsweise um eine Bohrungsfläche eines Innenrings, eine Mantelfläche eines Außenrings, eine Stirnfläche eines Innenrings, eine Stirnfläche eines Außenrings, eine Bohrungsfläche eines Gehäuses, eine Mantelfläche einer Welle, eine Stirnfläche eines Gehäuses oder eine Stirnfläche einer Wellenschulter handeln.

Die Schichtdicke des Lacks im getrockneten Zustand kann wenigstens 15 µm, vorzugsweise wenigstens 20 µm betragen. Weiterhin kann die Schichtdicke des Lacks im getrockneten Zustand höchstens 70 µm, vorzugsweise höchstens 50 µm betragen.

Zudem bezieht sich die Offenbarung auf ein Verfahren zur Ausbildung einer reibschlüssigen Verbindung zwischen einem ersten Maschinenteil und einem zweiten Maschinenteil. Beim Verfahren wird auf eine erste Anlagefläche des ersten Maschinenteils oder auf eine zweite Anlagefläche des zweiten Maschinenteils ein reibungserhöhender Lack aufgetragen, der als Inhaltsstoffe einen Binder und Hartstoff-Partikel enthält, wobei die Hartstoff-Partikel eine Titan-Bor-Verbindung aufweisen oder aus einer Titan-Bor-Verbindung bestehen. Nach dem Trocknen des Lacks werden das erste Maschinenteil und das zweite Maschinenteil im Bereich der Anlageflächen gegeneinander gepresst und dadurch wenigstens einige der im Lack enthaltenen Hartstoffpartikel in die erste Anlagefläche und in die zweite Anlagefläche eingedrückt. Die dadurch ausgebildeten formschlüssigen Mikroverbindungen haben einen sehr hohen Reibungskoeffizienten zur Folge.

Mit Hilfe eines im Lack enthaltenen Feststoffs, beispielsweise Zink, kann erreicht werden, dass die Lackschicht bei später auftretenden höheren Anpressdrücken nicht mehr nennenswert komprimiert wird und es dadurch zu Maßveränderungen oder einen Verschleiß fördernden Mikrobewegungen kommen kann. Durch die Hartstoff-Partikel alleine ist keine ausreichend stabile Abstützung der Anlageflächen gewährleistet, da die Hartstoff-Partikel mit zunehmendem Druck immer tiefer in die Anlageflächen eingedrückt werden.

Der Lack kann in einer Schichtdicke im feuchten Zustand von wenigstens 20 µm, vorzugsweise wenigstens 25 µm aufgetragen werden. Weiterhin kann der Lack in einer Schichtdicke im feuchten Zustand von höchstens 80 µm, vorzugsweise höchstens 60 µm aufgetragen werden. Der Lack kann auch auf weiteren Flächen des ersten Maschinenteils oder des zweiten Maschinenteils aufgetragen werden, die nicht an einer Gegenfläche zur Anlage kommen. Bei dem ersten Maschinenteil und/oder bei dem zweiten Maschinenteil kann es sich um ein Lagerbauteil insbesondere eines Großlagers insbesondere einer Windkraftanlage handeln.

Die Erfindung wird nachstehend anhand von Ausführungsbeispielen für die Zusammensetzung und die Anwendung des erfindungsgemäßen Lacks näher erläutert.

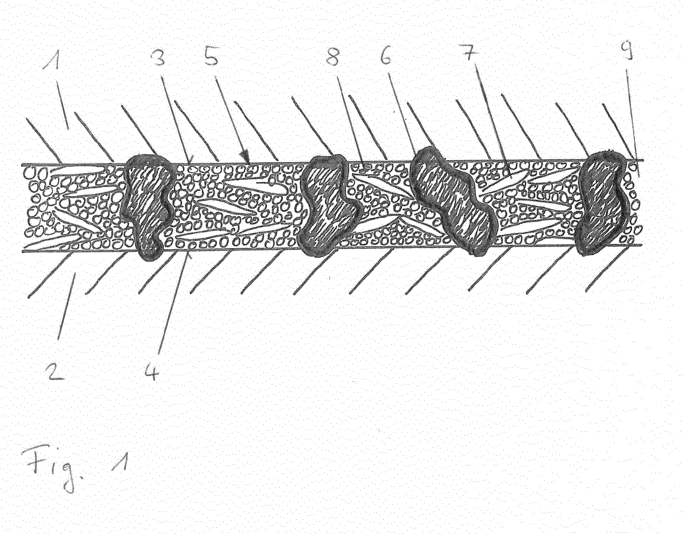

Dabei zeigt Figur 1 eine Prinzipdarstellung zur Erläuterung einer erfindungsgemäß ausgebildeten reibschlüssigen Verbindung.

Wie im Folgenden noch näher erläutert wird, ist der erfindungsgemäße Lack nach einer anfangs auftretenden gewünschten Einformung weitgehend inkompressibel und hat reibungserhöhende und korrosionsschützende (incl. Gegenflächenschutz bei einseitigem Auftrag) Eigenschaften. Der Lack eignet sich insbesondere als Anstrich für Großlager, speziell für Wälzlager- oder Gleitlageraußenflächen und Innenringanlageflächen zweireihiger Kegelrollenlager. Der Lack kann beispielsweise bei Großwälzlagern eingesetzt werden, die in Windkraftanlagen oder anderen großen Maschinen verbaut werden.

Bei Großlagern sind in an manchen Flächen neben einem Korrosionsschutz auf Außenflächen auch erhöhte Reibwerte auf Flächen erwünscht, an die beispielsweise etwas angeflanscht werden soll. Dort ist dann aber in der Regel der Korrosionsschutzbedarf geringer. Ebenso soll z.B. zwischen den Innenringhälften auf einfache Weise eine Reibwerterhöhung erreicht werden.

Die Anforderungen an einen idealen Lack für Großwälzlager sind kompliziert. Er soll zur Vermeidung der Gefahr von Abrasivstoffrückständen, die eine auf Dauer schädliche Feinkontamination darstellen können, auf nichtgestrahlten und feinbearbeiteten Stahloberflächen trotz deren ungenügender Rauheit hervorragend haften, er soll einfach und fehlerfrei mischbar und mit definierter Schichtdicke gleichmäßig auftragbar sein, er soll gut decken und in nur einer einzigen Schicht fertig gestellt werden, er soll sehr rasch mechanisch belastbar durchhärten, er soll ausgehärtet abriebfest und hoch druckfest sein, er muss absolut ölbeständig sein, er soll im Auftrag nur geringes Einfließen in Spalte bei Kapillarwirkung haben, und er darf ausgehärtet unter Belastung in der Flanschverbindung nicht beliebig kriechen oder fließen oder nachgeben. Er darf andererseits nicht spröde sein oder zu Abplatzen neigen und muss eine Restelastizität besitzen. Gleichzeitig soll er einen maximalen Korrosionsschutz bieten und zusätzlich einen erhöhten Haftreibbeiwert.

Ein Teil der Anforderungen ließe sich durch Wahl eines feuchtigkeitshärtenden Einkomponenten-Polyurethan-Systems, im Folgenden kurz 1K-PU-System, lösen, welches bei etwa 30 % Binder (also etwa 70 % Feststoff in der getrockneten Schicht, d. h. ohne Lösungsmittel) leicht und gleichmäßig auftragbar, schnell trocknend, hochhaftfest und chemisch wie auch mechanisch stabil sowie trotz Elastizität durch die Füllstoffe wenig kompressibel ist. Das Aushärten des Lacks erfolgt über eine Vernetzung von funktionalen Enden (Isocyanat) des PU-Systems. Das Volumen der getrockneten Schicht beträgt ungefähr 70 % des Volumens der nassen Schicht. Mit einmaligem Anstrich per Roller wurden Schichtdicken der getrockneten Schicht von 40 µm ± 5 µm erreicht.

Anders als Silikate haftet Polyurethan bei erhöhtem Binderanteil auch auf nicht gestrahlten Wälzlageroberflächen sehr gut. Bei einer Haftfestigkeitsprüfung nach DIN EN ISO 4624 beträgt der Abreißwert auf einer geschliffenen, nicht gestrahlten Stahloberfläche typisch 17-20 MPa, wobei der Bruch beim Abreißen innerhalb der Beschichtung auftritt.

Der reine Korrosionsschutz kann dabei durch einen Zinkpulveranteil in der getrockneten Schicht von beispielsweise 60% bis 70 % erreicht werden. Solche metallpulvergefüllten Lacke weisen keine Reaktion zwischen dem Feststoffpulver und dem Binder auf, das Zinkpulver wird einfach vom Polyurethan an die Oberfläche "geklebt". Somit ist es ohne Einschränkung auch möglich, andere Füllstoffe einzukleben, solange sie inert sind und nicht mit PU reagieren.

Von harten Farbfüllstoffzusätzen wie Bariumsulfat bis zu weichen Zusätzen wie Talkumpulver oder PTFE ist prinzipiell eine unendliche Varianz denkbar.

Zum Beispiel wird dem Lack, vorzugsweise auf der 1K-Polyurethan-Basis mit Feuchtigkeitshärtung, ein reibwerterhöhendes Pulver, im einfachsten Fall beispielsweise Quarzmehl, und eventuell auch ein Zinkpulver zugegeben, wenn gleichzeitig Korrosionsschutz oder Druckfestigkeit der Matrix gefordert wird. Die Viskosität kann über den Vorvernetzungsgrad des Polyurethans und den Lösemittelanteil so eingestellt werden, dass beim Aufrollen die gewünschte Schichtdicke von z. B. 40 µm erzielt wird.

Ersetzt man aber das Zinkpulver ganz oder teilweise durch das reibwerterhöhende Pulver, so verschwindet der Korrosionsschutz oder wird zumindest reduziert. Das liegt daran, dass er nur dann besteht, wenn die Zinkpartikel sich gegenseitig kontaktieren, was einen sehr hohen Zinkanteil - mehr Zinkmenge, als pro Fläche für einen puren galvanischen Schutz nötig wäre- erfordert.

Zwar hat zinkgefüllter Lack naturgemäß einen erhöhten Reibwert, insbesondere als Zink-Silikat-Lack, beispielsweise Alkalisilikat-Lack mit Zinkstaub; dieser ist aber weder näher einstellbar noch weiter steigerbar.

Eine weitere Steigerung der Reibung gegenüber reibschlüssigem Zinklack erfordert harte Partikel mit Mikroverzahnung. Durch die harten Partikel können formschlüssige Mikroverbindungen mit den zu verbindenden Maschinenteilen ausgebildet werden. Außerdem können die harten Partikel als Ankerpunkte in der Schicht gegen ein Kriechen der hoch zinkhaltigen Matrix dienen.

Die Anforderung eines reibungserhöhenden Zusatzes steht der Anforderung nach guter Oberflächenversiegelung und hohem Korrosionsschutz genau gegenläufig gegenüber. Reibungserhöhende Zuschlagstoffe oder Abrasivkörner senken den Korrosionsschutz zum Teil drastisch. Es helfen hier keine klassischen anderen Zuschläge wie z.B. Eisenglimmer, die selbst wieder vorteilhaften Korrosionsschutz bewirken, aber nur reibschlüssig wirksam sind, sondern maximale Reibwerte verlangen nach harten Partikeln mit Mikroverzahnung.

Bei den Hartstoffen als reibungserhöhende Zuschläge, alle basierend auf hoher Härte und Mikroverzahnung bei Ausübung des Anpressdruckes bei Montage, sind verschiedene Varianten denkbar.

Geht es um eine maximale Reiberhöhung, sind sehr harte Partikel geeignet, die eine kantige Geometrie aufweisen, wie beispielsweise Schleifkorn. Insbesondere kommen zähharte Schleifkornsorten in Frage wie beispielsweise, Einkristallkorund, kubisches Edelkorund oder Zirkonkorund. Ebenso kann auch kostengünstig verfügbares Quarzmehl (Mohshärte 7) zum Einsatz kommen. Die genannten Materialien neigen aber alle zum Splittern unter Druck. Dies birgt das Risiko, dass freie Kornspitzen absplittern, die Wirkung nachlässt und sich dann spätestens bei der Demontage des Großwälzlagers ein mikrofeiner Abrasivstaub auf der Oberfläche ergibt. Ein derartiges Risiko kann insbesondere dann bestehen, wenn zur Reibungserhöhung z. B. zwischen benachbarten Innenringen des Großlagers lackiert werden sollte und von dort ein Zugang zu den Laufbahnen besteht, ggf. nach Demontage eines dort vorgesehenen Dichtrings. Außerdem könnte die reibungserhöhende Wirkung durch das Zerfallen der Hartstoffpartikel herabgesetzt werden. Beispielsweise nach einer Demontage und anschließenden erneuten Montage des Großwälzlagers kann bzgl. der Reibungserhöhung bereits ein starker Wirkungsverlust auftreten. Wird das Großwälzlager bei Erstmontage aus unerwarteten Gründen nochmals gelöst oder vor Montage mechanisch belastet, wird die Wirkung bereits bei der Erstmontage extrem herabgesetzt. Die genannten Materialien eignen sich somit primär für eine Einwegbeschichtung, die keine Montagenachjustierungen und Handhabungsfehler erlaubt. Mögliche Anwendungsfälle sind definitiv nur einmal anzuziehende z. B. äußere Flanschverbindungen am Großwälzlager. Bei derartigen Anwendungen lässt sich mit diesen Materialien billig und gut eine deutliche Reibwerterhöhung erzielen, jedoch ohne hohen Korrosionsschutz.

Geht es um sauberkeitssensible Bereiche wie den Stoss der beiden Innenringe, einhergehend mit einer mehrfachen oder zumindest sichereren Nutzbarkeit hinsichtlich anfänglicher Montage und Demontage, ist es denkbar, anstelle von Al2O3 beispielsweise Zirkonoxidkugeln (ZrO2) zu verwenden. Diese haben lediglich eine ähnliche Härte wie der Wälzlagerstahl und splittern nicht, könnten also als sicher gelten. Sie sind beispielsweise verfügbar als Kugeln, 700 HV, mit 68% Zirkonoxid und 32 % Glasphase amorphes Siliziumoxid. Der erzielbare Reibwert ist aber niedriger als bei den vorstehend genannten Schleifkornsorten, da das Eindringen in gehärteten Wälzlagerstahl wegen Härte und Form gering ist und eine Kugelform eher zum Rollen unter Last tendiert.

Die vorstehend beschriebenen Materialvarianten haben jeweils unterschiedliche Vorzüge und Einschränkungen. Allen gemein ist allerdings, dass der Korrosionsschutz weitgehend aufgehoben ist.

Eine weitere Möglichkeit ist beispielsweise Borcarbidpulver (Boron Carbide) B4C. Borcarbidpulver ist in geeigneten Körnungen verfügbar. Beispielsweise ist eine Körnung 12-40 µm verfügbar (Klasse F360), die einschichtig in eine 40 µm dicke PU-Lackschicht hineinpasst. Borcarbidpulver hat eine dem Diamanten vergleichbare Härte, jedoch bei einem deutlich geringem Preis. Die Gesundheitsgefahr (aus reiner Staubbelastung Lunge und Augen) erlischt, sobald das Pulver in Lack gebunden ist und folglich nicht eingeatmet werden kann. Hier hätte man ein sehr stabiles aber preiswertes Korn, das auf schlagfreien Druck kaum splittert und sich in gehärteten Wälzlagerstahl mühelos eindrücken lässt - eine gute Symbiose aus den Anforderungen von Außenflanschen und Innenringverbindung. Allerdings wird auch durch Borcarbidpulver kein Korrosionsschutz erzielt.

Im Rahmen der Erfindung wird daher anderen Hartstoff-Partikeln der Vorzug gegeben. Erfindungsgemäß wird vorgeschlagen, den feuchtigkeitshärtenden 1K-PU-Lack derart auszustatten, dass von den ca. 70 % Feststoffanteil z.B. etwa 40% bis 60 % Zink und 60 % bis 40 % ein elektrisch hochleitfähiger, dem B4C verwandter Hartstoff sind. Dieser Hartstoff ist Titandiborid TiB2. Titandiborid ist ein elektrisch leitendes Keramikpulver und findet in Lacken bisher überhaupt keine Anwendung. Titandiborid ist zu akzeptablen Preisen und in geeigneten Korngrößen verfügbar. Bei Raumtemperatur weist Titandiborid einen spezifischen elektrischen Widerstand von 9 bis 15×10⁻⁶ Ωcm auf.

Ein derartiger Lack wirkt nicht als Isolator zwischen den Fügepartnern. Durch die hervorragende Leitfähigkeit des selbst inerten TiB2 werden die verbleibenden Zinkpartikel weiterhin elektrisch miteinander verbunden, wodurch die Zinkstaubmenge ohne Nachteil für den Korrosionsschutz deutlich abgesenkt werden kann. Es liegt ein aktiver kathodischer Korrosionsschutz vor. Ein Salzsprühtest zeigt, dass der Korrosionsschutz selbst bei einer partiellen Beschädigung der Lackschicht erhalten bleibt. Dabei lässt sich ein Korrosionsschutz in gleicher Qualität wie bei einem reinen Polyurethan-Zink-Lack erreichen. Der mit zwei 40µm-Schichten erzielbare Korrosionsschutz entspricht ungefähr C4/10Jahre nach EN ISO 12944-2:2000. Die Hartstoffpartikel führen sogar auf einer passivierten Oberfläche oder Gegenfläche zu einer verzahnenden absolut blanken Zwangskontaktierung unter Druck, welche elektrisch inniger ist als der durch PU abgeschwächte flach anliegende Partikelkontakt. Somit schließt dieser Hartstoff die elektrische Verbindung zwischen den verringerten Zinkpartikelanteilen, kontaktiert beide Oberflächen, auch die nichtlackierte Gegenfläche durch eventuelle Oxidschichten hindurch (es wird vorzugsweise nur 1 Seite der Fügepartner lackiert), und führt zu einer in gehärteten Wälzlagerstahl eindringenden reibwerterhöhenden Mikroverzahnung mit geringer Splitterneigung. Die Splittrigkeit tendiert zu plattigem Bruch, was die Wahrscheinlichkeit erhöht, dass der Bruch in der PU-Matrix verbleibt. Die Mikroverzahnung bewirkt, dass es selbst bei geölten oder gefetteten Flächen zu einer Erhöhung des Reibwerts kommt. Die Mohs-Härte liegt mit 9,5 ebenso wie B4C unmittelbar am Diamant, und auch im Vergleich Knoop 3000/2600 und Vickers 3800/3300 ist die mechanische Belastbarkeit nicht weit unter der Referenz B4C. Aus der splitternden herstellseitigen Zerkleinerungsmethode von TiB2 ergibt sich ein kantig-spitzes eindrückfähiges Korn und eine Siebung in voller Verfügbarkeit fast aller Korngrößen. Interessant ist insbesondere der Bereich mesh 400 bis mesh 700, was einem größten Korn von ca. 50 µm bzw. ca. 100 µm entspricht. Damit ist es auch im Vorteil gegenüber manchen konventionellen Körnern wie z. B. dem ansonsten erwägbaren zähharten Zirkonkorund, der in feiner Körnung bisher gar nicht verfügbar ist. Durch den hohen Feststoffanteil des Lacks lässt sich damit eine mechanisch harte, schlagfeste Beschichtung ausbilden. Dies erleichtert die Handhabung lackierter Maschinenteile.

Der Lack kann mit Hilfe einer Dissolverscheibe gemischt werden. Infolge der hohen inneren Reibung des Lacks kann es beim Mischen zu einer starken Temperaturerhöhung kommen, die wiederum eine Vergrößerung der im Lack enthaltenen Moleküle begünstigen kann. Außerdem kann es zu einer Zerkleinerung der Hartstoffpartikel kommen. Aus diesen Gründen werden die Mischungsdauer und die Rotationsgeschwindigkeit der Dissolverscheibe auf ein für eine ausreichende Mischung erforderliches Mindestmaß begrenzt.

Eine typische erfindungsgemäße Rezeptur sieht also folgendermaßen aus (die %-Angaben sind jeweils auf eine angegebene Basis bezogen und repräsentieren den jeweiligen Anteil daran in Vol%):
Der Lack enthält einen Lösemittelanteil (z. B. Naphta) von 20 % bis 40 %, insbesondere 30 %.

Nach Abzug des Lösemittelanteils setzt sich der verbleibende Trockenanteil folgendermaßen zusammen, wobei als Bezugsgröße für die Prozentzahlen der gesamte Trockenanteil zugrunde gelegt wird:
- 20-40 %, erfindungsgemäß etwa 30 %, einkomponentiges feuchtigkeitshärtendes Polyurethan (Basis aromatisches Polyisocyanat),
- 50-80 % Feststoffanteil,
- bis zu 10 % Additive (fest oder flüssig).

Bei einem Polyurethananteil von weniger als 20 % treten Probleme bzgl. der Haftung des Lacks an der Oberfläche des Maschinenteils auf; oberhalb 40 % ist die Korrosionsschutzwirkung des Lacks nicht mehr gewährleistet, da nicht mehr von einer durchgehenden elektrischen Verbindung über das gesamte Volumen der Lackschicht ausgegangen werden kann.

Der Feststoffanteil weist folgende Zusammensetzung auf, wobei als Bezugsgröße für die Prozentzahlen der gesamte Feststoffanteil zugrunde gelegt wird:
- 30-70 %, vorzugsweise 40-60 %, insbesondere 40 % Titandiborid in der Körnung mesh 700,
- 30-70 %, vorzugsweise 40-60 %, insbesondere 60 % Zink mit Körnung 5 µm.

Die Oberflächenrestfeuchte des TiB2 wird mit < 0,1 % spezifiziert, was wegen dem feuchtigkeitsreaktiven Binder bedeutsam ist. Bis zu 20 % des Titandiborids können durch Borcarbid B4C ersetzt werden. Das Zink wird dem Lack insbesondere in Form von Zinkpulver zugemischt. Das Zinkpulver kann zum Teil auch durch Zinklamelle ersetzt werden. Sofern keine Zinklamelle enthalten ist, können Thixotropierungszusätze vorgesehen werden. Typische deklarierte Inhaltsstoffe können sein:
Zinkpulver, Zinkstaub, stabilisiert / Zinkpulver, Zinkstaub, nichtstabilisiert / Zinkoxid / Zinklamellen / Zinkphosphat / 1,3,5-Trimethylbenzol / Mesitylen / Xylol, Isomerengemisch / Cumol / Diphenylmethandiisocyanat, Isomeren und Homologen /1,2,4-Trimethylbenzol / Lösungsmittelnaphta.

Zur reibschlüssigen Verbindung zweier Maschinenteile kann folgendermaßen vorgegangen werden.

Zunächst wird eines der Maschinenteile im Bereich einer Fläche, an der das andere Maschinenteil mit einer Gegenfläche zur Anlage kommen soll, mit dem Lack beschichtet. Eine Beschichtung mit dem Lack ist bei Temperaturen bis herab zum Gefrierpunkt und darunter möglich. Nach dem Trocknen des Lacks werden die beschichtete Fläche und die Gegenfläche aneinander zur Anlage gebracht und mit einem vorgegebenen Anpressdruck gegeneinander gepresst. Der Anpressdruck wird so hoch gewählt, dass wenigstens einige der im Lack enthaltenen Harnstoff-Partikel sowohl in die beschichtete Fläche als auch in die Gegenfläche eingedrückt werden und dadurch in beiden Oberflächen lokale Vertiefungen erzeugen. Der Anpressdruck kann beispielsweise ca. 100 MPa betragen und dadurch erzeugt werden, dass die Maschinenteile mittels Schrauben gegeneinander verspannt werden. Der Anpressdruck muss in dieser Höhe nicht zwingend dauerhaft beibehalten werden. Ein Absinken bis auf 20 % seines ursprünglichen Werts führt in der Regel noch nicht zu einem Versagen der reibschlüssigen Verbindung. Wichtig ist aber, dass anfänglich ein ausreichend hoher Anpressdruck ausgeübt wird.

Zur Erleichterung der Anwendung und zur Erhöhung der Anwendungssicherheit kann der Lack Farbindikatoren und/oder Strukturindikatoren enthalten. Mittels eines ersten Indikators kann der Trocknungsgrad des Lacks angezeigt werden. So kann der Lack im feuchten Zustand, d. h. unmittelbar nach dem Auftragen, eine dunkelgraue Farbe aufweisen, die sich beim Trocknen zunehmend in ein Mittelgrau aufhellt. Auf diese Weise kann festgestellt werden, ob der Lack ausreichend trocken ist und das Maschinenteil, auf das er aufgetragen wurde somit montiert werden kann. Ein weiterer Indikator kann anzeigen, wird stark der Anstrich bereits mechanisch belastet wurde. Dadurch kann beispielsweise bei einer Demontage eines mit dem Anstrich versehen Maschinenteils geprüft werden, ob ein korrekter Anpressdruck vorlag und es ist ersichtlich, dass das Maschinenteil bereits montiert war und der Anstrich vor einer erneuten Montage ersetzt werden muss. Bei dem weiteren Indikator kann es sich insbesondere um einen kombinierten Farb- und Strukturindikator handeln, der dem Anstrich abhängig von der Stärke der mechanischen Belastung irreversibel ein fein silber/grau geschecktes Aussehen verleiht.

Eine Prinzipdarstellung der mit dem Verfahren ausgebildeten reibschlüssigen Verbindung ist in Figur 1 abgebildet. Wie im Folgenden noch näher erläutert wird, hängen bei dieser reib schlüssigen Verbindung die Schichtdicke des Systems und die zu wählende Korngröße zwingend zusammen.

Die reibschlüssige Verbindung ist zwischen einer ersten Komponente 1 und einer zweiten Komponente 2 ausgebildet. Bei den Komponenten 1, 2 kann es sich um beliebige Maschinenteile handeln. Insbesondere kann es sich eine Paarung aus einem Lagerring und einem Gehäuse- oder Rahmenteil, mit dem der Lagering durch die reibschlüssige Verbindung verdrehsicher verbunden ist, handeln. Ebenso kann es sich beispielsweise um eine Paarung aus zwei Lagerringen handeln.

Die erste Komponente 1 weist eine erste Anlagefläche 3 und die zweite Komponente 2 eine zweite Anlagefläche 4 auf, wobei die erst Anlagefläche 3 und die zweite Anlagefläche 4 einander zugewandt sind und voneinander beabstandet angeordnet sind. Der Bereich zwischen der ersten Anlagefläche 3 und der zweiten Anlagefläche 4 ist durch eine Reibschicht 5 ausgefüllt. Die Reibschicht 5 kann durch Auftragen des erfindungsgemäßen Lacks beispielsweise auf die erste Anlagefläche 3 und anschließendes Trocknen ausgebildet werden. Die Reibschicht 5 weist elektrisch leitende Hartstoffkörner 6, insbesondere in Form von Hartstoff-Partikeln aus Titandiborid, auf. Weiterhin weist die Reibschicht 5 ein lamellenartiges Korrosionsschutzmaterial 7, insbesondere in Form von Zinklamellen und ein pulvriges Korrosionsschutzmaterial 8, insbesondere in Form von Zinkpulver, auf. Sämtliche Inhaltsstoffe der Reibschicht 5 sind in einer Matrix 9, insbesondere in Form eines Binders aus Polyurethan, gebunden.

Aus Figur 1 ist ersichtlich, dass die Hartstoffkörner 6 größere Abmessungen aufweisen als die Dicke der komprimierten Reibschicht 5 und somit beidseits aus der Reibschicht 5 herausragen und sowohl in die erste Anlagefläche 3 der ersten Komponente 1 als auch in die zweite Anlagefläche 4 der zweiten Komponente 2 eingedrückt sind. Auf diese Weise werden formschlüssige Mikroverbindungen zwischen den Hartstoffkörnern 6 und den beiden Komponenten 1, 2 ausgebildet, die einen sehr hohen Reibungskoeffizienten zur Folge haben. Bei geschliffenen Wälzlagerringen lässt sich beispielsweise ein Reibungskoeffizient von ca. 0,48 erzielen. An den Hartstoffkörnern 6 können das lamellenartige Korrosionsschutzmaterial 7 und/oder das pulvrige Korrosionsschutzmaterial 8 berührend anliegen und dadurch eine elektrisch leitende Verbindung ausbilden. Auch zwischen dem lamellenartigen Korrosionsschutzmaterial 7 und dem pulvrigen Korrosionsschutzmaterial 8 kommt es zu vielfachen Berührungen und somit zu elektrisch leitenden Verbindungen. Außerdem kommt es zu Berührungen der elektrisch leitenden Inhaltsstoffe der Reibschicht 5 mit der ersten Anlagefläche 3 und der zweiten Anlagefläche 4. Auf diese Weise ist eine durchgehende elektrisch leitende Verbindung über das gesamte Volumen der Reibschicht 5 ausgebildet, so dass das in der Reibschicht 5 enthaltene lamellenartige Korrosionsschutzmaterial 7 und das pulvrige Korrosionsschutzmaterial 8 die Anlageflächen 3, 4 zuverlässig vor Korrosion schützen können.

Außerdem ist die Reibschicht 5 durch das lamellenartigen Korrosionsschutzmaterial 7 und das pulvrige Korrosionsschutzmaterial 8 sehr tragfähig, so dass mit der Reibschicht 5 ein Mechanisch sehr stabiler Verbund zwischen den Komponenten 1, 2 ausgebildet werden kann, der auch durch zwischenzeitlich auftretende Druckspitzen nicht gelockert oder verschlissen wird und auch nicht in seiner Maßhaltigkeit beeinträchtig wird. Eine ähnliche Wirkung ließe sich auch mit sonstigen Feststoffen erzielen, die über eine ausreichende Tragfähigkeit verfügen, jedoch keinen Korrosionsschutz bieten. Alleine durch das Polyurethan würde dies jedoch nicht in nennenswertem Maß erreicht, da dies zu laich nachgibt und durch kriechen oder fließen ausweicht.

Nachfolgende Überlegungen basieren darauf, dass immer nur eine Fläche der mechanischen Paarung, d. h. eine der in Figur 1 dargestellten Anlageflächen 3 und 4, lackiert wird, was auch die Herstellkosten senkt.

Körner, die deutlich größer sind als die Schichtdicke des Lacks, machen die Oberfläche rau und erschweren bereits den Auftrag und auch das Handling der fertigbeschichteten Teile mit z. B. Hebezeugschlupfen. Die Oberfläche ist ungleichmäßig und wirkt auf ihre Umgebung abrasiv. Durch den Rolleffekt großer Körner beim Auftrag per Walze kann es hinter dem Korn zu einer Schichtunterdeckung kommen.

Körner, die wesentlich kleiner sind als die Schichtdicke, und die sich nicht auf anderen Feststoffen abstützen können, sind in der nur teilelastischen PU-Zn-Matrix wirkungslos und führen nicht zur mechanischen Verzahnung. Es ist entweder die Einbindung des Kornes in einer harten Matrix nötig (z. B. chemisch-Nickel) oder das Korn muss beide Montagepartner erreichen. Bei Wahl einer elastischen Matrix sind deswegen relativ große Körner zu verwenden. Andererseits ist es nicht erforderlich, dass alle Hartstoff-Partikel in ihrem Durchmesser der Schichtdicke entsprechen, was wiederum der Haftung des Lackes sehr abträglich wäre. Die hohe Beladung mit Feststoffen aus Zink und TiB2 oder TiB2 und B4C sichert ab, dass auch bei kleinerem Korn keine volle Nachgiebigkeit in der PU-Matrix besteht.

Außerdem ist unter der sehr hohen Last der Verschraubung der Flansche oder sonstigen Maschinenteile ein Kriechen der Nichtfeststoffanteile des Lackes, also des PU, teilweise mit dem darin enthaltenen Zinkpulver bis zur vollflächigen Anlage unvermeidlich. Geeignete Werte für den durch die Verschraubung erzeugten Anpressdruck mit Erreichen einer flächigen Anlage liegen bei ca. 100 MPa. Ausgehend von diesem Wert führt eine Steigerung auf 300 MPa dann zu einer relativ geringen Restsetzung von maximal 2 µm. Ein Kriechen ist nicht zu beobachten. Die initiale Kompression liegt bei etwa 5µm bei einer Schichtdicke von ca. 35 µm. Die gesamte Nachgiebigkeit des Schichtsystems ist wegen des Feststoffanteils von typisch 70 % dennoch als gering anzusehen. Hier helfen die Hartstoff-Partikel zusätzlich, ein Mitkriechen von (gleitfähigen) Zinkanteilen zu vermeiden. Infolge der hohen Haftfähigkeit der Lackschicht ist selbst bei den vorstehend genannten Anpressdrücken nach einer Demontage des Maschinenteils kein Ablösen der Lackschicht und kein Übertragen der Lackschicht auf die nicht lackierte Gegenfläche erkennbar. Ein Ablösen der Lackschicht mit einem Lösemittel ist nicht möglich, so dass die Lackschicht bei einer weiteren Verwendung des Maschinenteils mechanisch entfernt und durch eine neue Lackschicht ersetzt werden muss, um wieder sehr hohe Reibwerte zu erzielen.

Ein anfänglich gegenüber z. B. Silikatlacken größere Ausgleichsfähigkeit der Lackschicht durch Kriechen (plastisch) und Elastizität ist erwünscht, um Dickenunterschiede des Auftrags auszugleichen und eine vollflächige Anlage großer Fügeflächen erreichen zu können. Außerdem werden durch das Kriechen die Hartstoff-Partikel freigelegt. Infolge des Kriechens kommt es auch zu einer Abdichtung oder Versiegelung, so dass beispielsweise keine korrosiven Flüssigkeiten zwischen die Fügeflächen eindringen können.

Ein PU-Zink-Lack mit 70 % Zink in der trockenen Schicht lässt sich (immer ausreichend große Berührflächen vorausgesetzt) um etwas mehr als 30 % zusammendrücken und erreicht dann eine quasimetallische Hartlage. Ein ebensolcher Lack mit nichtfließfähigen Hartstoff-Partikeln weist eine noch geringere Kriechwirkung auf. Beispielsweise kommt ein 35 µm- Korn in einer 40 µm- Schicht bei Montage gerade noch zur beidseitigen Hartlage.

In der Regel ist es ausreichend, wenn man für die Hartstoffpartikel eine Siebung verwendet, deren Maximalkorn oberhalb der angestrebten Schichtdicke liegt, und deren Maximum der Gaußverteilung für die Korngröße noch innerhalb liegt.

Wenn die Lackauftragsdicke nicht genau steuerbar ist, können größere Körner die Sicherheit in der Anwendung erhöhen.

Gemäß einem Ausführungsbeispiel wird eine Schicht der Dicke 20-45 µm (getrockneter Zustand) ausgebildet. Eine derartige Schichtdicke lässt sich mit einem einschichtigen Auftrag von PU erzielen. Geringere Schichtdicken weisen grundsätzlich - auch mit konventionellem Zink- keinen ausreichenden Korrosionsschutz auf. Der Lack kann TiB2-Pulver in Siebung 400 mesh enthalten, die Größtkörner (×100) von etwa 50 µm und eine Größtmenge (x50) um 15 µm aufweist. Alternativ dazu kann der Lack beispielsweise auch TiB2-Pulver in Siebung 700 mesh enthalten mit Größtkörnern (×100) von etwa 100 µm und einer Größtmenge (x50) um 28 µm enthalten. Die Körnung des Zinkpulvers wird so auf die Körnung des Hartstoffpulvers abgestimmt, dass man eine möglichst hohe Schüttdichte erreicht.

Gute Ergebnisse lassen sich beispielsweise mit einem Anteil von 60 % TiB2 in der Siebung 400 mesh bei einer Sollschichtdicke 25±5 µm, insbesondere 25-30 µm, erzielen. Die Korngröße des Zinkpulvers beträgt ca. 5 µm. Bei einem Anpressdruck von 100 MPa ergibt sich eine Kompression der Schichtdicke um 4 µm. danach sind etwaige anfängliche Unebenheiten der Schicht weitgehend ausgeglichen und Hohlräume in der Schicht weitgehend ausgefüllt, so dass die Maschinenteilen jeweils vollflächig an der Schicht anliegen. Wird der Anpressdruck auf 300 MPa erhöht, reduziert sich die Schichtdicke nochmals um 2 µm. Durch eine weitere Erhöhung des Anpressdrucks lässt sich keine nennenswerte weitere Reduzierung der Schichtdicke erzielen. Dies resultiert im Wesentlichen aus der hohen Tragfähigkeit des zusammengepressten Zinkpulvers, dass zudem durch die Hartstoff-Partikel an einer lateralen Fließbewegung gehindert wird. Die Fließfähigkeit des Polyurethans wird durch das Zinkpulver und die Hartstoff-Partikel ebenfalls stark reduziert. Somit wird insgesamt eine mechanisch hoch belastbare und sehr stabile Schicht ausgebildet. Für eine zuverlässige reibschlüssige Verbindung zweier Maschinenteile aus einem harten Stahl sollte der Anpressdruck unter den gegebenen Bedingungen wenigstens 100 MPa betragen- Ähnliches gilt für 60% TiB2 in der Siebung 700 mesh bei einer Sollschichtdicke 40±10 µm, insbesondere 35-40 µm. Auch hier beträgt die Korngröße des Zinkpulvers ca. 5 µm. Bei einem Anpressdruck von 100 MPa ergibt sich eine Kompression der Schichtdicke um 5 µm. Wird der Anpressdruck auf 300 MPa erhöht, reduziert sich die Schichtdicke nochmals um 5 µm. Für eine zuverlässige reibschlüssige Verbindung zweier Maschinenteile aus einem harten Stahl sollte der Anpressdruck unter den gegebenen Bedingungen wenigstens 200 MPa betragen-Ebenso ist beispielsweise auch ein Anteil von 40% TiB2 in der Siebung 700 mesh bei einer Sollschichtdicke von ca. 35 µm möglich. Auch hier beträgt die Korngröße des Zinkpulvers ca. 5 µm. Die Kompression der Schichtdicke bei einem Anpressdruck von 100 MPa variiert etwas mit dem Vernetzungsgrad des Polyurethans. Bei einer geringen Vernetzung ergibt sich eine Kompression der Schichtdicke um 5 µm. Bei einer höheren Vernetzung ist die Elastizität geringer und es ergibt sich dem gemäß auch eine etwas geringere Kompression um beispielsweise 4 µm. Wird der Anpressdruck auf 300 MPa erhöht, reduziert sich die Schichtdicke in beiden Fällen nochmals um 1 bzw. 2 µm, so dass sich jeweils insgesamt eine Reduzierung um 6 µm ergibt.

Beide im Lack enthaltenen Pulver - oder falls zusätzlich B4C zum Einsatz kommt, alle drei Pulver - werden größenmäßig aufeinander abgestimmt und für einen Soll-Dickenbereich der fertigen einlagigen Schicht konzipiert. Für verschiedene Soll-Schichtdicken wird die gleiche Grund-Rezeptur mit verschiedenen Pulverkörnungen verwendet. Die unterschiedliche Schichtdicke wird über die Körnung der verwendeten Pulver und gleichzeitig über die Viskosität des PU-Binders eingestellt. Eine höhere Lösemittelzugabe (VOC) senkt die Viskosität und macht die Schicht dünner - und umgekehrt.

Bei einer weiteren Variante kommen zusätzlich Zirkonoxidkugeln (ZrO2 mit SiO) mit einer Korngröße von z. B 10-30 µm zum Einsatz. Diese weisen nur eine Härte von 700 HV auf, stellen aber eine inkompressible Feststoff-Füllung dar und besitzen keine Splittrigkeit. Durch ihre kugelige Form und sehr genaue Größensiebung verbunden mit diesen Eigenschaften ergeben sie bei Bedarf einen definierten Abstandhalter. Benötigt man eine Schicht definierter Dicke, kann ein Anteil an Zirkonoxidkugeln das Gleiten der Zink-PU-Matrix und die Eindringtiefe der Titandiboridkörner bei einer vorhersagbaren Schichtdicke anhalten.

Um möglichst optimale Ergebnisse zu erzielen, muss verhindert werden, dass der Binder nach dem Auftrag im Nasszustand absackt. Das erfordert eine thixotrope Einstellung. Aus diesem Grund ist es von Vorteil, wenn dem Lack ein Thixotropierungsmittel zugesetzt wird. Der Lack wird bei Bewegung flüssiger (Auftrag), ohne Bewegung steifer (Trocknung).

Die innere elektrische Kontaktierung im Lack kann verbessert werden, wenn nicht nur Zinkpulver verwendet wird, sondern auch ein Anteil Zinklamellen. In einer Mischung aus Zinkpulver und Zinklamellen erhält man die optimale Packungsdichte bei mehr Berührflächen untereinander. Die Zugabe von Zinklamellen thixotropiert ebenfalls. Der Anteil an lamellenförmigen leitfähigen Feststoffen kann auch ganz oder teilweise aus Eisenglimmer statt aus Zinklamellen bestehen.

Anstelle eines 1-Komponenten-Polyurethans kann auch ein 2-Komponenten-Polyurethan oder ein 2-Komponenten-Epoxidharz zum Einsatz kommen. Mit einer Silikatbindung sind aber weder Haftfähigkeit noch Einformbarkeit erreichbar, so dass diese Bindung ausscheidet.

Es besteht auch die Möglichkeit, zwei Anstriche miteinander zu kombinieren, die jeweils auf eine der Eigenschaften Korrosionsschutz oder Reibwerterhöhung optimiert sind. Für den einen Anstrich kann ein 1K-Polyurethan-Zinkpulverlack für den reinen Korrosionsschutz von Außenflächen verwendet werden. Für den anderen Anstrich, der zur Erhöhung des Reibwerts auf eine Fügefläche aufgetragen wird, kann eine andere Mischung auf gleicher 1K-PU-Basis verwendet werden, der Hartstoffpartikel zugesetzt sind. Die beiden Produkte vertragen sich miteinander, da gleicher Binder, und können anstrichtechnisch am Lager folglich problemlos überlappen. Zur Vermeidung von Verwechslung kann eines der Produkte leicht eingefärbt werden, z.B. Zinklack leicht rötlich und Reiblack reines grau.

### Bezugszeichen

- 1: Erste Komponente
- 2: Zweite Komponente
- 3: Erste Anlagefläche
- 4: Zweite Anlagefläche
- 5: Reib schicht
- 6: Hartstoffkörner
- 7: Lamellenartiges Korrosionsschutzmaterial
- 8: Pulvriges Korrosionsschutzmaterial
- 9: Matrix

## Patentansprüche

1. Korrosionsschutzlack mit einem Binder auf Polyurethanbasis und mit Zink als korrosionsschützenden Feststoffanteil, **dadurch gekennzeichnet, dass** der Binder ein feuchtigkeitshärtendes Einkomponenten-Polyurethan-System ist und der Lack bezogen auf das Volumen ohne Lösungsmittel einen Anteil an dem polyurethanbasierten Binder von ungefähr 30 Vol. % enthält, wobei der Lack weiterhin Hartstoffpartikel, aus einer Titan-Bor-Verbindung, enthält.

2. Korrosionsschutzlack nach Anspruch 1, wobei der Lack bezogen auf das Volumen ohne Lösungsmittel einen Feststoffanteil von etwa 70 Vol. % aufweist.

3. Korrosionsschutzlack nach Anspruch 1 oder 2, wobei der Binder ein feuchtigkeitshärtendes Einkomponenten-Polyurethan auf Basis eines aromatischen Polyisocyanats ist.

4. Korrosionsschutzlack nach einem der vorhergehenden Ansprüche, wobei der Feststoffanteil eine Mischung aus Zinkpulver und Zinklamellen enthält.

5. Korrosionsschutzlack nach einem der vorhergehenden Ansprüche, wobei der Lack bezogen auf das Volumen ohne Lösungsmittel ungefähr 30 Vol. % Binder und einen Feststoffanteil von ungefähr 70 Vol. % und maximal 10 Vol. % Additive aufweist, und der Feststoffanteil ungefähr 40 Vol. % Titandiborid und 60 Vol. % Zink aufweist.

6. Korrosionsschutzlack nach einem der vorhergehenden Ansprüche, wobei der Lack einen der folgenden Inhaltsstoffe aufweisen kann:
Zinkpulver, Zinkstaub, Zinkoxid; Zinklamellen; Zinkphosphat; 1,3,5-Trimethylbenzol; Mesitylen; Xylol; Cumol; Diphenylmethandiisocyanat; 1,2,4-Trimethylbenzol; Lösungsmittelnaphta.

7. Lagerbauteil, insbesondere Lagerring eines Großwälzlagers, mit einer nichtgestrahlten und/oder feinbearbeiteten Oberfläche, wobei die nichtgestrahlte und/oder feinbearbeiteten Oberfläche mit einem Korrosionsschutzlack nach einem der vorhergehenden Ansprüche beschichtet ist.

8. Lagerbauteil nach Anspruch 7 wobei das Lagerbauteil mit zwei Schichten Korrosionsschutzlack beschichtet ist, wobei vorzugsweise eine Schicht ungefähr 40µm ist.

9. Lagerbauteil nach Anspruch 7 oder 8, wobei der Lack in einer Schichtdicke im feuchten Zustand von wenigstens 20 µm, vorzugsweise wenigstens 25 µm aufgetragen ist.

10. Lagerbauteils nach einem der Ansprüche 7 bis 9 wobei der Lack in einer Schichtdicke im feuchten Zustand von höchstens 80 µm, vorzugsweise höchstens 60 µm aufgetragen ist.

## Claims

1. Anti-corrosion varnish with a binder based on polyurethane and with zinc as anti-corrosion solids fraction, **characterized in that** the binder is a moisture-curing one-component polyurethane system and the varnish based on the volume without solvent contains a fraction of the polyurethane-based binder of approximately 30 vol%, the varnish additionally containing hard-material particles composed of a titanium-boron compound.

2. Anti-corrosion varnish according to Claim 1, where the varnish based on the volume without solvent has a solids fraction of about 70 vol%.

3. Anti-corrosion varnish according to Claim 1 or 2, where the binder is a moisture-curing one-component polyurethane based on an aromatic polyisocyanate.

4. Anti-corrosion varnish according to any of the preceding claims, where the solids fraction comprises a mixture of zinc powder and zinc flakes.

5. Anti-corrosion varnish according to any of the preceding claims, where the vanish based on the volume without solvent has approximately 30 vol% of binder and a solids fraction of approximately 70 vol%, and not more than 10 vol% of additives, and the solids fraction has approximately 40 vol% of titanium diboride and 60 vol% of zinc.

6. Anti-corrosion varnish according to any of the preceding claims, where the varnish may comprise one of the following ingredients:
zinc powder, zinc dust, zinc oxide; zinc flakes; zinc phosphate; 1,3,5-trimethylbenzene; mesitylene; xylene; cumene; diphenylmethane diisocyanate; 1,2,4-trimethylbenzene; solvent naphtha.

7. Bearing component, more particularly bearing ring of a large roller bearing, having an unblasted and/or finish-machined surface, the unblasted and/or finish-machined surface being coated with an anti-corrosion varnish according to any of the preceding claims.

8. Bearing component according to Claim 7, the bearing component being coated with two layers of anti-corrosion varnish, where preferably a layer is approximately 40 µm.

9. Bearing component according to Claim 7 or 8, the varnish being applied in a layer thickness in the wet state of at least 20 µm, preferably at least 25 µm.

10. Bearing component according to any of Claims 7 to 9, the varnish being applied in a layer thickness in the wet state of at most 80 µm, preferably at most 60 µm.

## Revendications

1. Laque anticorrosion comprenant un liant à base de polyuréthane et comprenant du zinc en tant que proportion de matières solides anticorrosion, **caractérisée en ce que** le liant est un système de polyuréthane monocomposant durcissant à l'humidité et la laque contient, par rapport au volume sans solvant, une proportion du liant à base de polyuréthane d'environ 30 % en volume, la laque contenant en outre des particules dures d'un composé de titane et de bore.

2. Laque anticorrosion selon la revendication 1, la laque présentant, par rapport au volume sans solvant, une proportion de matières solides d'environ 70 % en volume.

3. Laque anticorrosion selon la revendication 1 ou 2, dans laquelle le liant est un polyuréthane monocomposant durcissant à l'humidité à base d'un polyisocyanate aromatique.

4. Laque anticorrosion selon l'une quelconque des revendications précédentes, dans laquelle la proportion de matières solides contient un mélange de poudre de zinc et de lamelles de zinc.

5. Laque anticorrosion selon l'une quelconque des revendications précédentes, la laque présentant, par rapport au volume sans solvant, environ 30 % en volume de liant et une proportion de matières solides d'environ 70 % en volume, et au maximum 10 % en volume d'additifs, et la proportion de matières solides comprenant environ 40 % en volume de diborure de titane et 60 % en volume de zinc.

6. Laque anticorrosion selon l'une quelconque des revendications précédentes, la laque pouvant comprendre l'un des ingrédients suivants :
poudre de zinc, poussière de zinc, oxyde de zinc ; lamelles de zinc ; phosphate de zinc ; 1,3,5-triméthylbenzène ; mésitylène ; xylène ; cumène ; diisocyanate de diphénylméthane ; 1,2,4-triméthylbenzène ; solvant naphta.

7. Composant de palier, notamment bague de palier d'un palier à roulement de grandes dimensions, comprenant une surface non grenaillée et/ou finement usinée, la surface non grenaillée et/ou finement usinée étant revêtue d'une laque anticorrosion selon l'une quelconque des revendications précédentes.

8. Composant de palier selon la revendication 7, le composant de palier étant revêtu de deux couches de laque anticorrosion, une couche étant de préférence d'environ 40 µm.

9. Composant de palier selon la revendication 7 ou 8, dans lequel la laque est appliquée en une épaisseur de couche à l'état humide d'au moins 20 µm, de préférence d'au moins 25 µm.

10. Composant de palier selon l'une quelconque des revendications 7 à 9, dans lequel la laque est appliquée en une épaisseur de couche à l'état humide d'au plus 80 µm, de préférence d'au plus 60 µm.
